# EUROPÄISCHE PATENTSCHRIFT

(11) **EP 3 146 241 B1**
(45) Veröffentlichungstag und Bekanntmachung des Hinweises auf die Patenterteilung: **18.04.2018**
(21) Anmeldenummer: 15730388.4
(22) Anmeldetag: 22.05.2015
(51) Int. Cl.: F16H 57/04, F16D 13/74, F16D 21/06

(54) **DOPPELKUPPLUNGSGETRIEBE**
DOUBLE CLUTCH TRANSMISSION
BOÎTE DE VITESSES À DOUBLE EMBRAYAGE

(30) Priorität: 22.05.2014 DE 102014007540
(43) Veröffentlichungstag der Anmeldung: 29.03.2017
(73) Patentinhaber: Daimler AG, 70327 Stuttgart (DE)
(72) Erfinder: SPERRFECHTER, Stefan, 73072 Donzdorf (DE); STRAUB, Heinrich, 70327 Stuttgart (DE); BOU ROMANO, Josep Maria, 70188 Stuttgart (DE); HÄRTER, Tobias, 70174 Stuttgart (DE); HAHN, Peter, 70374 Stuttgart (DE); ROMANIAK, Jakub, 70186 Stuttgart (DE); SCHWEITZER, Jürgen, 70794 Filderstadt (DE)
(74) Vertreter: JENSEN & SON
(86) Internationale Anmeldenummer: PCT/EP2015/001042
(87) Internationale Veröffentlichungsnummer: WO 2015/176823

(56) Entgegenhaltungen:
- DE-A1-102005 059 115
- DE-A1-102008 040 171
- DE-A1-102009 032 338
- DE-A1-102011 005 724
- US-A- 3 474 888
- US-A1- 2008 128 212
- US-A1- 2009 294 241

## Beschreibung

Die Erfindung betrifft eine Getriebevorrichtung und ein Doppelkupplungsgetriebe mit einem Zahnradsatz, mit einem Trockensumpf zur Schmierung des Zahnradsatzes und mit einer erfindungsgemäßen Getriebevorrichtung.

Aus der DE 10 2005 059 115 A1, die ein Doppelkupplungsgetriebe nach dem Oberbegriff des Anspruchs 1 offenbart, ist bereits eine Getriebevorrichtung mit einem Kupplungsgehäuse, das einen Kupplungsraum zur Aufnahme zumindest einer Lastschaltkupplung begrenzt, und mit einem Sammel- und Leitblech zur gezielten Weiterleitung von aus dem Kupplungsraum herausgeschleudertem Schmieröl bekannt.

Aus der US 2008/128212 A1 ist eine Getriebevorrichtung mit einem Getriebegehäuse, mit einem innerhalb des Getriebegehäuses angeordneten Kupplungsgehäuse und mit einem Schmiermittelspeicher zur Aufnahme eines Schmiermittels für die Getriebevorrichtung bekannt, wobei der Schmiermittelspeicher einen zumindest mittelbar mit dem Getriebegehäuse verbundenen Ölfangring umfasst, der das Kupplungsgehäuse zumindest teilweise umgibt, wobei der Ölfangring eine dem Kupplungsgehäuse zugewandte Seite aufweist, die im Wesentlichen als Ölführungsfläche ausgebildet ist und die zumindest eine Aussparung aufweist, die zur Führung von Schmiermittel in den Schmiermittelspeicher hinein vorgesehen ist.

Der Erfindung liegt insbesondere die Aufgabe zugrunde, eine Getriebevorrichtung bereitzustellen, bei der eine Trockensumpfschmierung für die Getriebevorrichtung mit einem geringen Aufwand realisiert werden kann. Sie wird durch eine erfindungsgemäße Ausgestaltung entsprechend dem Anspruch 1 gelöst. Weiterbildungen der Erfindung ergeben sich aus den abhängigen Ansprüchen. Unter einem Trockensumpf wird im Rahmen der Erfindung ein Schmiermittelsystem für die Getriebevorrichtung verstanden, in welchem der Sumpf der Getriebevorrichtung, also die Schmiermittelwanne der Getriebevorrichtung trocken ist oder ein Schmiermittelstand in der Schmiermittelwanne so ausgebildet ist, dass drehende Getriebebauteile nicht in das in der Schmiermittelwanne gespeicherte Schmiermittel eintauchen. Mit einem Trockensumpf sind Planschverluste reduzierbar.

Die Erfindung geht aus von einem Doppelkupplungsgetriebe umfassend eine Getriebevorrichtung mit einem Kupplungsgehäuse und mit einem Schmiermittelspeicher zur Aufnahme eines Schmiermittels für die Getriebevorrichtung, der einen Ölfangring umfasst, der den Kupplungsraum zumindest teilweise umgibt.

Die Erfindung geht weiterhin davon aus, dass der Ölfangring eine dem Kupplungsgehäuse zugewandte Seite aufweist, die im Wesentlichen als Ölführungsfläche ausgebildet ist und die zumindest eine Aussparung aufweist, die zur Führung von Schmiermittel in den Schmiermittelspeicher hinein vorgesehen ist. Darunter, dass die dem Kupplungsgehäuse zugewandte Seite "als Ölführungsfläche ausgebildet ist", soll in diesem Zusammenhang verstanden werden, dass die dem Kupplungsgehäuse zugewandte Seite dazu vorgesehen ist, von dem Kupplungsgehäuse abgeschleudertes Schmiermittel aufzufangen und dem Schmiermittelspeicher zuzuführen. Vorzugsweise ist die Ölführungsfläche frei von vorstehenden Bauelementen wie Rippen. Insbesondere ist die Ölführungsfläche dazu vorgesehen, das Schmiermittel zu der zumindest einen Aussparung zur Einleitung in den Schmiermittelspeicher zu führen. Darunter, dass die dem Kupplungsgehäuse zugewandte Seite "im Wesentlichen" als Ölführungsfläche ausgebildet ist, soll in diesem Zusammenhang verstanden werden, dass die zumindest eine Aussparung maximal 8 Prozent, vorteilhaft maximal 6 Prozent und bevorzugt maximal 4 Prozent einer Gesamtfläche der Seite ausmacht. Unter "umgeben" wird im Rahmen der Erfindung insbesondere verstanden, dass der Ölfangring den Kupplungsraum in radialer Richtung umringt, wodurch ein Ringraum zwischen dem Kupplungsgehäuse und dem Ölfangring ausgebildet wird. Insbesondere umgibt der Ölfangring den Kupplungsraum zumindest teilweise in axialer Richtung. Indem der Ölfangring den Kupplungsraum zumindest teilweise in axialer Richtung umgibt, wird Schmiermittel, das in einem Betrieb der Getriebevorrichtung von Schmierstellen der Lastschaltkupplung abgeschleudert wird, an den Ölfangring geschleudert und von diesem in den Schmiermittelspeicher gefördert, wodurch eine Rückförderung von Schmiermittel von Schmierstellen aus, ohne Einsatz einer separaten Pumpe zurück in den Schmiermittelspeicher erreicht werden kann. Durch eine solche Ausgestaltung kann der Trockensumpf mit einem geringen Bauraumbedarf realisiert werden. Durch die Ausbildung der dem Kupplungsgehäuse zugewandten Seite im Wesentlichen als Ölführungsfläche kann auch eine ruhige Führung des Schmiermittels erreicht werden und ein Aufschäumen des Schmiermittels kann vermindert werden. Zudem sind für eine Förderung des Schmiermittels in den Schmiermittelspeicher keine zusätzlichen Fördereinrichtungen notwendig. Auch entfällt eine Notwendigkeit für zusätzliche Steuer- und/oder Regel-Einheiten zur Ansteuerung und/oder Regelung der Fördereinrichtungen. Somit kann der Trockensumpf mit einer verringerten Bauteilanzahl und einem verringerten Energiebedarf realisiert werden und eine Trockensumpfschmierung mit einem geringen Aufwand realisiert werden.

Der Ölfangring ist insbesondere zumindest mittelbar mit einem Getriebegehäuse der Getriebevorrichtung verbunden. Der Ölfangring ist zumindest mittelbar getriebegehäusefest. Der Ölfangring rotiert nicht um eine Rotationsachse der Getriebevorrichtung.

Erfindungsgemäß weist das Doppelkupplungsgetriebe einen Zahnradsatz und einen Trockensumpf zur Schmierung des Zahnradsatzes auf. Es kann mit einem geringen apparativen Aufwand und einem verringerten Energiebedarf durch Einsparung von Rückförderpumpen eine Schmierung des Zahnradsatzes mit geringen Planschverlusten erreicht werden.

Weiterhin wird vorgeschlagen, dass die dem Kupplungsgehäuse zugewandte Seite des Ölfangrings einen geringen radialen Abstand zu dem Kupplungsgehäuse aufweist. Unter einem "geringen radialen Abstand" soll in diesem Zusammenhang ein radialer Abstand verstanden werden, der maximal 5 Prozent, vorteilhaft maximal 4 Prozent und bevorzugt maximal 3 Prozent eines Außendurchmessers des Kupplungsgehäuses beträgt. Unabhängig von dem Außendurchmesser des Kupplungsgehäuses beträgt der Abstand maximal 15 mm. Dadurch kann eine rasche Abführung von Schmiermittel, das im Betrieb von dem Kupplungsgehäuse abgeschleudert wird, erreicht werden. Eine Ausbildung eines Ölsumpfs im Bereich des sich in einem Betrieb drehenden Kupplungsgehäuses kann damit vermieden werden. Schleppverluste der Kupplung durch Drehung innerhalb eines Ölsumpfs können dadurch verringert werden.

Des Weiteren wird vorgeschlagen, dass der Abstand höchstens 10 mm, bevorzugt höchstens 5 mm, beträgt. Dadurch kann eine besonders sichere Abführung des Schmiermittels, das im Betrieb von dem Kupplungsgehäuse abgeschleudert wird, erreicht werden.

Ferner wird vorgeschlagen, dass die dem Kupplungsgehäuse zugewandte Seite zumindest eine Rampe zur Leitung des Schmiermittels ausbildet. Dadurch kann eine verschäumungsarme Einleitung des Schmiermittels in die Aussparung und damit in den Schmiermittelspeicher erreicht werden. Unter einer "Rampe" soll dabei insbesondere ein Bereich verstanden werden, in dem die Ölführungsfläche eine Oberflächennormale aufweist, die einen spitzen Winkel mit einer auf eine Rotationsachse der Getriebevorrichtung bezogenen Radialrichtung einschließt.

Weiterhin wird vorgeschlagen, dass die dem Kupplungsgehäuse zugewandte Seite des Ölfangrings zumindest eine weitere Aussparung aufweist, die um einen Winkel von höchstens 150 Grad gegen die zumindest eine Aussparung versetzt angeordnet ist. Dadurch kann eine effiziente Abführung des auf die dem Kupplungsgehäuse zugewandte Seite des Ölfangrings auftreffenden und an der Ölführungsfläche geführten Schmiermittels erreicht werden. Insbesondere kann sowohl eine hohe Abfuhrleistung durch die zumindest eine Aussparung und die zumindest eine weitere Aussparung erreicht werden, als auch ein langer Führungsweg an der Ölführungsfläche zur Entschäumung des Schmiermittels. Unter einem "Winkel von höchstens 150 Grad wird dabei insbesondere ein auf die Rotationsachse der Getriebevorrichtung bezogener Winkel verstanden. Insbesondere wird darunter ein in einer Richtung, entlang der die zwei Aussparungen einen geringsten Abstand zueinander entlang eines Umfangs des Ölfangrings aufweisen, orientierter Winkel verstanden.

Des Weiteren wird vorgeschlagen, dass der Ölfangring eine obere Hälfte aufweist, in der die zumindest zwei Aussparungen angeordnet sind. Dadurch kann ein langer Auslaufweg des Schmiermittels von den Aussparungen an erreicht werden, der im Wesentlichen von der oberen Hälfte bis in die untere Hälfte des Ölfangrings reicht. In das Schmiermittel eingemischte Gasblasen können dadurch über eine längere Zeit aus dem Schmiermittel austreten. Dadurch kann eine große Entmischung des Schmiermittels von eingemischten Gasblasen erreicht werden. Unter einer "oberen Hälfte" soll in diesem Zusammenhang eine Hälfte des Ölfangrings verstanden werden, die nach Montage in der Getriebevorrichtung, in Bezug auf eine Schwerkraftrichtung oben angeordnet ist. Vorzugsweise sind sämtliche Aussparungen in der oberen Hälfte angeordnet, unabhängig davon, ob der Ölfangring lediglich eine einzige Aussparung oder mehrere Aussparungen aufweist.

In einer Ausgestaltung der Erfindung begrenzen das Getriebegehäuse und der Ölfangring ein Teilvolumen des Schmiermittelspeichers zumindest teilweise. Insbesondere wird das Teilvolumen des Schmiermittelspeichers auf zumindest einer Seite durch das Getriebegehäuse begrenzt. Dadurch, dass das Teilvolumen des Schmiermittelspeichers nach dieser Ausgestaltung der Erfindung auf zumindest einer Seite durch das Getriebegehäuse begrenzt ist, kann eine hohe Wärmeabführung über das mit Umgebungsluft oder sogar mit Fahrtwind gekühlte und zudem in der Regel mit Rippen versehene Getriebegehäuse erreicht werden und das Schmiermittel rasch abgekühlt werden. Von Vorteil für die Wärmeabfuhr ist dabei, dass das Schmiermittel erfindungsgemäß nicht nur an einem das gemäß dieser Ausgestaltung der Erfindung das Teilvolumen begrenzende Getriebegehäuse vorbeiströmt und in nur kurzzeitigen Kontakt mit dem Getriebegehäuse tritt, sondern dass das Schmiermittel in dem Teilvolumen des Schmiermittelspeichers gesammelt wird und somit in diesem für einen größeren Zeitspanne verweilt. Indem der zumindest mittelbar mit dem Getriebegehäuse verbundene Ölfangring das Teilvolumen auf einer dem Kupplungsgehäuse zugewandten Seite begrenzt, können ein Bauteilersparnis und ein Bauraumersparnis erreicht werden.

Des Weiteren wird vorgeschlagen, dass der Ölfangring einen Ölhobel ausbildet. Dadurch kann eine effiziente Förderung von abgeschleudertem Schmiermittel in den Ölfangring erreicht werden. Unter einem "Ölhobel" soll ein Einleitungsbereich für Schmiermittel verstanden werden, welcher eine schräg verlaufende Wandung aufweist, mit der der Ölhobel in einen Nebel aus Tropfen von abgeschleudertem Schmiermittel, welches von der sich drehenden Lastschaltkupplung abgeschleudert wurde, eingreift und eine Lage Schmiermittel aus dem Nebel abschält, welche entlang der schräg verlaufenden Wandung in den Ölfangring gefördert wird. Insbesondere weist der Ölhobel zwei Kanten auf, die senkrecht zu Umfangsrichtung einen Versatz zueinander aufweisen und die in den Nebel aus Tropfen von abgeschleudertem Schmiermittel eingreifen.

Ferner wird vorgeschlagen, dass der Ölfangring Schmiermittelleitungen aufweist, die zu einer Welleninnenschmierung vorgesehen sind. Dadurch können ein Verzicht auf Führungskanäle für Schmiermittel in einem Getriebegehäuse und ein Getriebegehäuse mit einer erhöhten Stabilität erreicht werden. Unter einer "Welleninnenschmierung" soll insbesondere eine Zuführung von Schmiermittel zu einer Welle verstanden werden, bei der das Schmiermittel über in einem Welleninneren angeordnete Kanäle in die Welle eingeführt wird und über Austrittskanäle an eine Außenseite der Welle zu Schmierstellen gelangt.

In einer Ausgestaltung der Erfindung umfasst der Schmiermittelspeicher einen Getrieberaum, in dem ein Teilvolumen des Schmiermittels speicherbar ist, wobei innerhalb des Getrieberaums eine elektrohydraulische Steuereinheit angeordnet ist.

Des Weiteren wird vorgeschlagen, dass das Teilvolumen, welches mittels des Ölfangrings ausgebildet ist, ein Teilvolumen von zumindest 0,4 Liter, vorzugsweise zumindest 0,6 Liter und besonders bevorzugt zumindest 0,8 Liter aufweist.

Ferner wird vorgeschlagen, dass das Teilvolumen des Schmiermittelspeichers, welches mittels des Ölfangrings ausgebildet ist, und das Teilvolumen des Schmiermittelspeichers, welches durch einen Getrieberaum gebildet wird, zusammen ein Speichervolumen von zumindest 2 Litern, vorzugsweise zumindest 2,5 Liter und besonders bevorzugt zumindest 3 Liter aufweisen.

Des Weiteren wird vorgeschlagen, dass der Ölfangring als ein Speicherring ausgebildet ist, wobei der Schmiermittelspeicher einen Getrieberaum umfasst, in dem ein Teilvolumen des Schmiermittels speicherbar ist, welches geringer ist als ein in dem als Speicherring ausgebildeten Ölfangring speicherbares Teilvolumen. Durch den Getrieberaum kann ein Beruhigungsraum zur Verfügung gestellt werden, in dem abgeschleudertes Schmiermittel, das durch den Ölfangring gefördert wurde, zur Ruhe kommen kann und Gasbläschen, die in dem abgeschleuderten Schmiermittel eingemischt sind, aus dem Schmiermittel austreten können, ohne dass ein Gesamtvolumen der Getriebevorrichtung unnötig vergrößert wird. Darunter, dass "das in dem Getrieberaum speicherbare Teilvolumen des Schmiermittels geringer ist als ein in dem als Speicherring ausgebildeten Ölfangring speicherbares Teilvolumen", soll in diesem Zusammenhang insbesondere verstanden werden, dass in dem Getrieberaum ein Teilvolumen des Schmiermittels speicherbar ist, welches maximal 70 Prozent, vorteilhaft maximal 50 Prozent und bevorzugt maximal 40 Prozent eines Teilvolumens, das in dem als Speicherring ausgebildeten Ölfangring speicherbar ist, beträgt.

Weitere Vorteile ergeben sich aus der folgenden Figurenbeschreibung. In den Figuren sind drei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Doppelkupplungsgetriebes mit einem Zahnradsatz, mit einem Trockensumpf zur Schmierung des Zahnradsatzes und mit einer Getriebevorrichtung,
- Fig. 2: eine Darstellung der Getriebevorrichtung mit einem Ölfangring, der ein Kupplungsgehäuse axial teilweise umgibt,
- Fig. 3: eine Detaildarstellung des Ölfangrings der Getriebevorrichtung,
- Fig. 4: eine Schnittdarstellung des Ölfangrings in einer Ansicht von oben,
- Fig. 5: eine Schnittdarstellung des Ölfangrings in einer Ansicht von unten,
- Fig. 6: eine Ansicht einer alternativen Ausführung des Ölfangrings,
- Fig. 7: eine Ansicht einer weiteren alternativen Ausführung der Getriebevorrichtung,
- Fig. 8: eine Detaildarstellung des Ölfangrings und
- Fig. 9: eine Schnittdarstellung der Getriebevorrichtung.

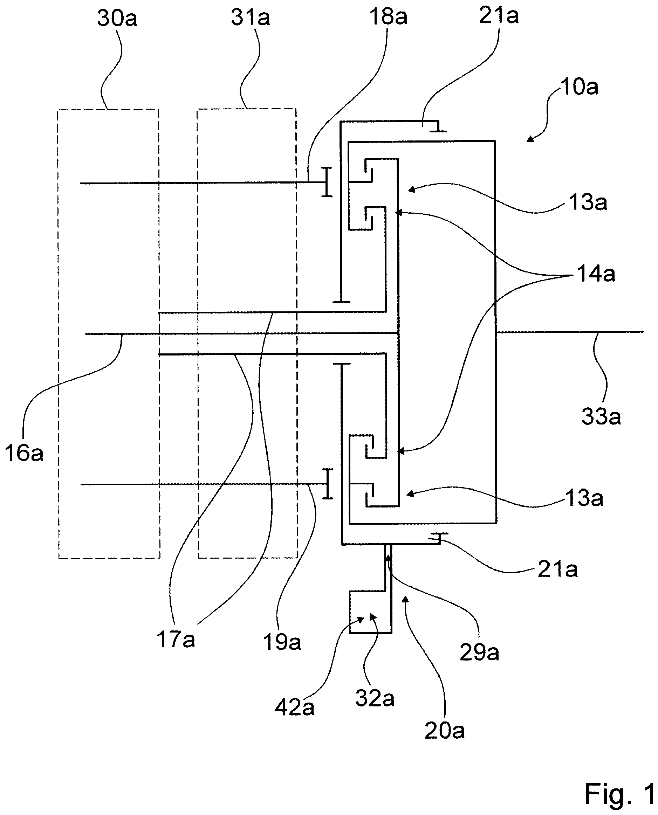

Fig. 1 zeigt eine schematische Darstellung eines Doppelkupplungsgetriebes mit einem Zahnradsatz, mit einem Trockensumpf zur Schmierung des Zahnradsatzes und mit einer Getriebevorrichtung 10a. Das Doppelkupplungsgetriebe umfasst zwei Teilgetriebe 30a, 31a für die geraden Gangstufen beziehungsweise die ungeraden Gangstufen. Das Doppelkupplungsgetriebe umfasst zudem eine Hohlwelle 17a mit darin aufgenommener Innenwelle 16a, eine obere Abtriebswelle 18a und eine untere Abtriebswelle 19a. Die Hohlwelle 17a bildet eine Eingangswelle für das erste Teilgetriebe 31a, und die Innenwelle 16a bildet eine Eingangswelle für das zweite Teilgetriebe 30a. Das Doppelkupplungsgetriebe umfasst ferner eine Haupteingangswelle 33a, die mit einer Kurbelwelle eines Motors verbunden ist.

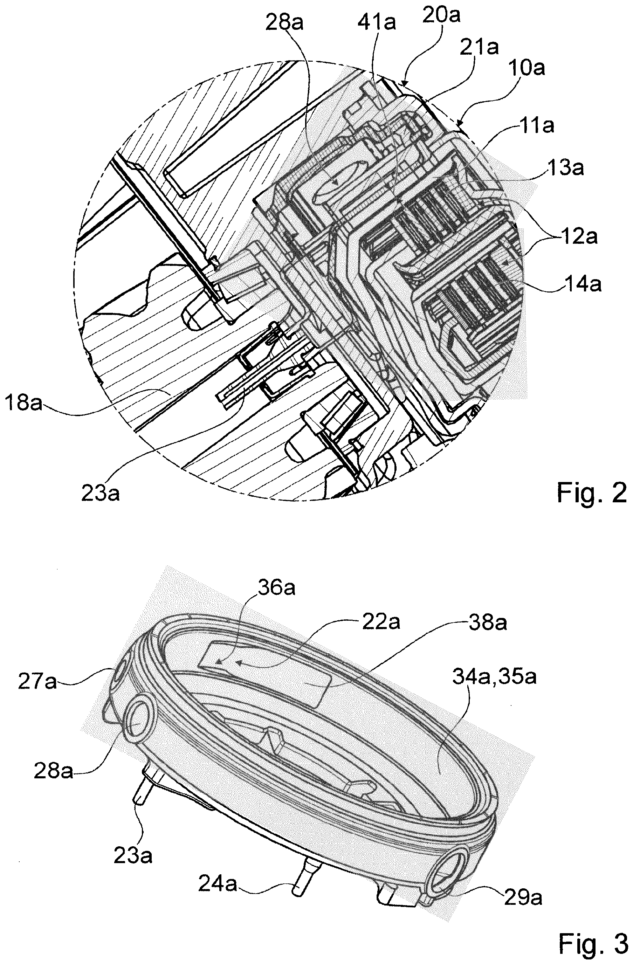

Die Getriebevorrichtung 10a umfasst ein Kupplungsgehäuse 11a, das einen Kupplungsraum 12a zur Aufnahme einer Lastschaltkupplung 13a begrenzt, und einen Schmiermittelspeicher 20a zur Aufnahme eines Schmiermittels für die Getriebevorrichtung 10a (Fig. 2). Das Kupplungsgehäuse 11a umschließt zwei Lastschaltkupplungen 13a, 14a, welche als Lamellenkupplungen ausgeführt sind. Durch Schließen einer der Lastschaltkupplungen 13a, 14a und Öffnen der jeweils anderen Lastschaltkupplung 13a, 14a wird zwischen unterschiedlichen Gängen umgeschaltet. In dem dargestellten Ausführungsbeispiel bildet das Kupplungsgehäuse 11a einen Außenlamellenträger der äußeren Lastschaltkupplung 13a aus. Es ist aber auch denkbar, dass das Kupplungsgehäuse 11a und der Außenlamellenträger getrennt voneinander ausgebildet sind, wobei in einer solchen Ausgestaltung das Kupplungsgehäuse 11a mit einem drehbaren Bauteil einer der Lastschaltkupplungen 13a, 14a verbunden ist.

Die obere Abtriebswelle 18a und die untere Abtriebswelle 19a, Lager zur Lagerung der Wellen, Zahnräder des Zahnradsatzes und die Lastschaltkupplungen 13a, 14a werden mit Schmiermittel geschmiert und gekühlt, das in dem Schmiermittelspeicher 20a gespeichert ist. Das Schmiermittel ist von Schmieröl gebildet. In einem Betrieb, in dem die Lastschaltkupplung 13a unter Last geschaltet wird, rotieren die obere Abtriebswelle 18a, die untere Abtriebswelle 19a sowie die Lastschaltkupplungen 13a, 14a. Schmiermittel, welches die Wellen und die Lastschaltkupplungen 13a, 14a schmiert, wird durch diese Rotation abgeschleudert.

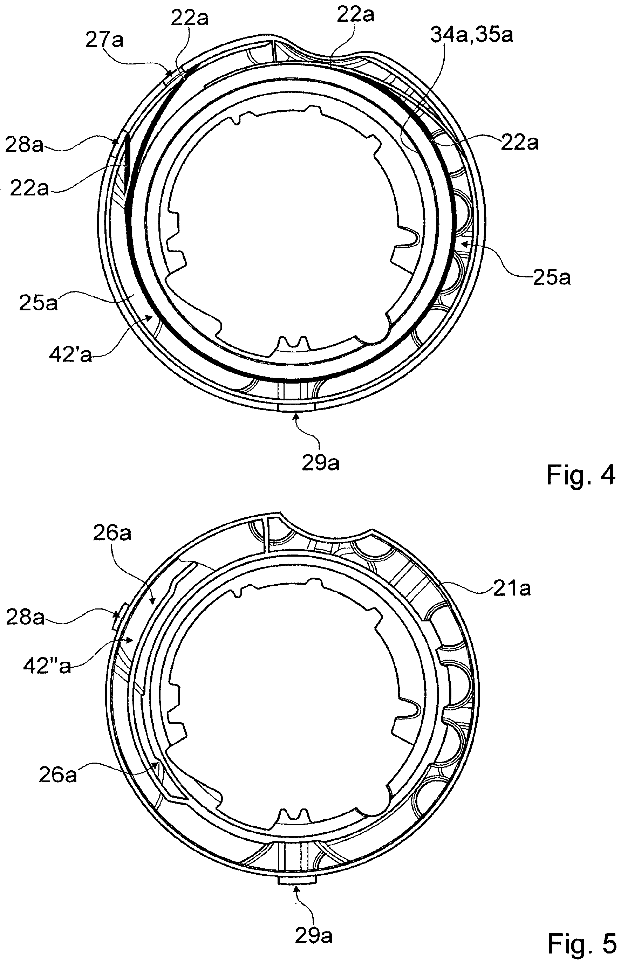

Der Schmiermittelspeicher 20a umfasst einen Ölfangring 21a, der den Kupplungsraum 12a teilweise in axialer Richtung umgibt. Der Ölfangring 21a umringt das Kupplungsgehäuse 11a. Der Ölfangring 21a ist als ein Speicherring ausgebildet. Der als Speicherring ausgebildete Ölfangring 21a bildet einen ringförmigen Körper aus, in dem in einem Körperinneren Schmiermittelkanäle 26a und ein umlaufender Ringkanal 25a ausgeführt sind, welche getrennt voneinander ausgebildet sind (Fig. 5). Der Schmiermittelspeicher 20a weist ein Gesamtvolumen zur Speicherung von Betriebsmittel auf. Die Schmiermittelkanäle 26a und der umlaufender Ringkanal 25a bilden zwei Teilvolumina 42'a, 42"a des Gesamtvolumens aus. Der als Speicherring zur Speicherung von Schmiermittel ausgebildete Ölfangring 21a weist eine Speicherkapazität von 0,8 Litern Schmiermittel auf.

Der Ölfangring 21a weist eine dem Kupplungsgehäuse 11a zugewandte Seite 34a auf, die im Wesentlichen als Ölführungsfläche 35a ausgebildet ist. Die dem Kupplungsgehäuse 11a zugewandte Seite 34a weist eine Aussparung 36a auf, die zur Führung von Schmiermittel in den Schmiermittelspeicher 20a hinein vorgesehen ist. Das im Betrieb von dem Kupplungsgehäuse 11a abgeschleuderte, auf die Ölführungsfläche 35a auftreffende Schmiermittel wird an der Ölführungsfläche 35a entlang auf die Aussparung 36a zugeleitet. Die Ölführungsfläche 35a ist im Wesentlichen glatt ausgeführt, sodass an der Ölführungsfläche 35a geführtes Schmiermittel in einer wenig turbulenten, ruhigen Strömung geführt wird. Aus dem an der Ölführungsfläche 35a ruhig geführtem Schmiermittel können eingemischte Luftblasen austreten. Das Schmiermittel wird somit entschäumt.

Die dem Kupplungsgehäuse 11a zugewandte Seite 34a weist einen geringen radialen Abstand 41a zu dem Kupplungsgehäuse 11a auf. Der Abstand 41a zwischen dem Kupplungsgehäuse 11a und der Ölführungsfläche 35a beträgt 6,0 mm±2,0 mm. Die Ölführungsfläche 35a ist in Form einer Zylindermantelfläche mit konstanten Krümmungsradius ausgebildet. Der Abstand 41a zwischen der dem Kupplungsgehäuse 11a zugewandte Seite 34a des Ölfangrings 21a und dem Kupplungsgehäuse 11a ist in dem dargestellten Ausführungsbeispiel, in dem das Kupplungsgehäuse 11a eine im Wesentlichen glatte Oberfläche aufweist, zumindest in einem Teilbereich konstant.

In dem Ölfangring 21a sind insgesamt drei Öffnungen ausgebildet: eine Befüllungsöffnung 27a, durch die ein Schmiermittelvorrat eingefüllt und somit in das Getriebe eingebracht wird, eine Rückführöffnung 28a, durch die Schmiermittel aus einem Radsatzraum zurück zu dem Schmiermittelspeicher 20a geleitet wird, und eine Ausgangsöffnung 29a, die das Schmiermittel weiterleitet (Fig. 3). Die Befüllungsöffnung 27a ist zu einer Erstbefüllung und zu Wiederbefüllungen des Schmiermittelspeichers 20a vorgesehen und wird nach einer Befüllung des Schmiermittelspeichers 20a mit einem Stopfen verschlossen. Die Befüllungsöffnung 27a ist mit dem umlaufenden Ringkanal 25a verbunden.

Die dem Kupplungsgehäuse 11a zugewandte Seite 34a des Ölfangrings 21a bildet in einem Teilbereich eine Rampe 38a zur Leitung des Schmiermittels aus. In dem Teilbereich, in dem die Seite 34a die Rampe 38a ausbildet, nimmt der Abstand 41a zwischen der Seite 34a und dem Kupplungsgehäuse 11a entlang einer Umfangsrichtung sukzessive zu. Die Aussparung 36a grenzt unmittelbar an die Rampe 38a an. Der Ölfangring 21a bildet an der dem Kupplungsgehäuse 11a zugewandten Seite 34a einen Ölhobel 22a aus, der von schräg verlaufenden Wandungsbereichen, welche die Rampe 38a ausbilden, gebildet ist (Fig. 4). Der Ölhobel 22a ist durch die Rampe 38a und die an die Rampe 38a angrenzende Aussparung 36a ausgebildet. Der Ölhobel 22a fördert Schmiermittel, welches von dem sich in einem Betrieb drehenden Kupplungsgehäuse 11a fortgeschleudert wird und an einer Innenseite des Ölfangrings 21a auftrifft, in den umlaufenden Ringkanal 25a, von wo es zu der Ausgangsöffnung 29a fließt. Der Ölfangring 21a ist mit einer Schräglage zu einer Wirkrichtung der Schwerkraft eingebaut, sodass das Schmiermittel durch Schwerkraftwirkung zu der Ausgangsöffnung 29a fließt.

Ein nicht dargestelltes Differentialrad des Doppelkupplungsgetriebes fördert durch seine Rotation in einem Betrieb des Doppelkupplungsgetriebes das Schmiermittel aus einem Radsatzraum, in dem die Zahnräder angeordnet sind, in den als Speicherring ausgebildeten Ölfangring 21a. Der Ölfangring 21a ist so angeordnet, dass das von dem Differentialrad geförderte Schmiermittel auf die Rückführöffnung 28a trifft und von dort in den umlaufenden Ringkanal 25a eintritt. Der Ölfangring 21a ist gegen eine Wirkrichtung der Schwerkraft geneigt angeordnet, so dass das Schmiermittel in dem umlaufenden Ringkanal 25a zu der Ausgangsöffnung 29a fließt. Durch die Wegförderung des Schmiermittels aus dem Radsatzraum wird der Trockensumpf realisiert.

Das Doppelkupplungsgetriebe umfasst ferner eine elektrohydraulische Steuereinheit, welche die Lastschaltkupplung 13a ansteuert. Die elektrohydraulische Steuereinheit ist innerhalb eines Getrieberaums 32a des Doppelkupplungsgetriebes angeordnet. Der Getrieberaum 32a bildet ein weiteres Teilvolumen 42a des Schmiermittelspeichers 20a aus. Ein von dem Getrieberaum 32a umschlossenes Teilvolumen des Schmiermittels ist größer als ein von dem Ölfangring 21a umschlossenes Teilvolumen des Schmiermittels (Fig. 1). Der Getrieberaum 32a ist über die Ausgangsöffnung 29a mit dem Ölfangring 21a verbunden. Das von dem Getrieberaum 32a umschlossene Teilvolumen des Schmiermittels beträgt 2,8 Litern und ist damit größer ist als das dem den Teilvolumina 42'a, 42"a des Schmiermittelspeichers 20a, das von dem Ölfangring 21a umschlossen wird, gespeicherte Teilvolumen von 0,8 Litern Schmiermittel. Der Getrieberaum 32a bildet ein weiteres Teilvolumen 42a des Schmiermittelspeichers 20a aus. In dem Schmiermittelspeicher 20a ist in dem dargestellten Ausführungsbeispiel somit ein Gesamtvolumen von 3,6 Litern Schmiermittel gespeichert. In dem Ölfangring 21a ist somit ein Teilvolumen des Schmiermittels gespeichert, welches weniger als ein Drittel des in dem Getrieberaum 32a gespeicherten Teilvolumens beträgt.

Schmiermittel, das in den Ölfangring 21a gefördert wurde, läuft nach Durchlauf des Ölfangrings 21a in den Getrieberaum 32a. In dem Getrieberaum 32a wird das Schmiermittel für eine bestimmte Zeit gelagert, bis es von einem Saugfilter angesaugt wird. In dieser Zeit beruhigt sich das aufgeschäumte Schmieröl und eventuell vorhandene Gasblasen trennen sich von dem Schmiermittel. Ein Schmiermittel, welches von dem Ölhobel 22a aufgenommen ist, ist durch diesen und durch eine Verweilzeit in dem Ölfangring 21a bereits zumindest teilweise entschäumt.

Der Ölfangring 21a weist Schmiermittelleitungen 23a, 24a auf, die zu einer Welleninnenschmierung vorgesehen sind (Fig. 2). Die Schmiermittelleitung 23a ist zu einer Welleninnenschmierung der oberen Abtriebswelle 18a vorgesehen, und die Schmiermittelleitung 24a ist zu einer Welleninnenschmierung der unteren Abtriebswelle 19a vorgesehen. Die Schmiermittelleitungen 23a, 24a sind als vorstehende Röhrchen ausgebildet, welche in einen Innenbereich der oberen Abtriebswelle 18a bzw. der unteren Abtriebswelle 19a eingreifen und diesen dort Schmiermittel zuführen. Die Schmiermittelleitungen 23a, 24a sind mit den Schmiermittelkanälen 26a verbunden, in denen das Schmiermittel gespeichert ist.

In dem Getrieberaum 32a ist zudem ein Saugfilter angeordnet, welcher das Schmiermittel ansaugt. Über eine korrespondierende Röhre ist der Getrieberaum 32a mit dem Ölfangring 21a verbunden. Über den Saugfilter wird das Schmiermittel in die korrespondierende Röhre gefördert und dort läuft das Schmiermittel weiter in die Schmiermittelkanäle 26a, von denen aus es über Schmiermittelleitungen 23a, 24a in ein Inneres der oberen Abtriebswelle 18a und der unteren Abtriebswelle 19a zur Welleninnenschmierung geleitet wird.

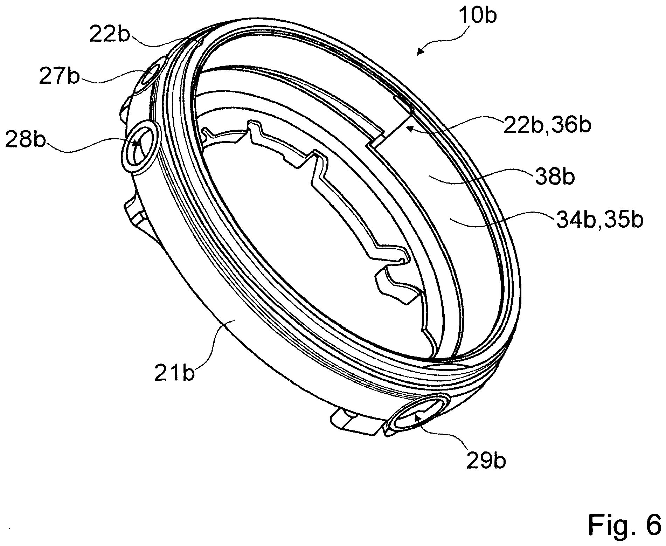

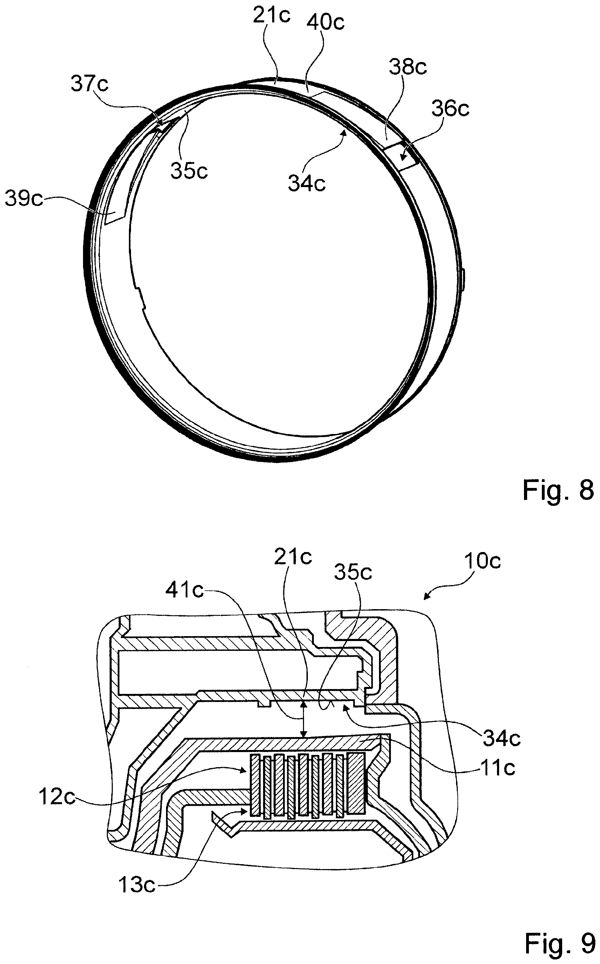

In den Figuren 6 bis 9 sind zwei weitere Ausführungsbeispiele der Erfindung gezeigt. Die nachfolgende Beschreibung beschränkt sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Figuren und/oder die Beschreibung der anderen Ausführungsbeispiele, insbesondere des Ausführungsbeispiels in den Figuren 1 bis 5, verwiesen werden kann. Zur Unterscheidung der Ausführungsbeispiele ist der Buchstabe a in den Bezugszeichen des Ausführungsbeispiels in den Figuren 1 bis 5 durch die Buchstaben b und c in den Bezugszeichen der Ausführungsbeispiele der Figuren 6 bis 9 ersetzt.

Ein weiteres Ausführungsbeispiel einer erfindungsgemäßen Getriebevorrichtung 10b umfasst eine alternative Ausführung eines Ölfangrings 21b eines Schmiermittelspeichers 20b. Der Ölfangring 21b weist eine dem Kupplungsgehäuse zugewandte Seite 34b auf, die im Wesentlichen als Ölführungsfläche 35b ausgebildet ist. Die dem Kupplungsgehäuse zugewandte Seite 34b weist eine Aussparung 36b auf, die zur Führung von Schmiermittel in den Schmiermittelspeicher 20b hinein vorgesehen ist. Die dem Kupplungsgehäuse 11b zugewandte Seite 34b des Ölfangrings 21b bildet in einem Teilbereich eine Rampe 38b zur Leitung des Schmiermittels aus. In dem Teilbereich, in dem die Seite 34b die Rampe 38b ausbildet, nimmt der Abstand 41b zwischen der Seite 34b und dem Kupplungsgehäuse 11b entlang einer Umfangsrichtung sukzessive zu. Die Aussparung 36b grenzt unmittelbar an die Rampe 38b an. Der Ölfangring 21b bildet an der dem Kupplungsgehäuse 11b zugewandten Seite 34b einen Ölhobel 22b aus, der von schräg verlaufenden Wandungsbereichen, welche die Rampe 38b ausbilden, gebildet ist. Der Ölhobel 22b ist durch die Rampe 38b und die an die Rampe 38b angrenzende Aussparung 36b ausgebildet Der Ölfangring 21b ist in dieser Ausführung lediglich dazu vorgesehen, mittels des Ölhobels 22b Schmiermittel, das an der dem Kupplungsgehäuse zugewandten Seite 34b auftrifft, in einen umlaufenden Ringkanal 25b zu fördern. Von dort wird das Schmiermittel wie in dem vorhergehenden Ausführungsbeispiel über eine Ausgangsöffnung 29b weitergeleitet. Eine Beölung der Wellen wird dann über Kanalstrukturen in einem Getriebegehäuse bewirkt.

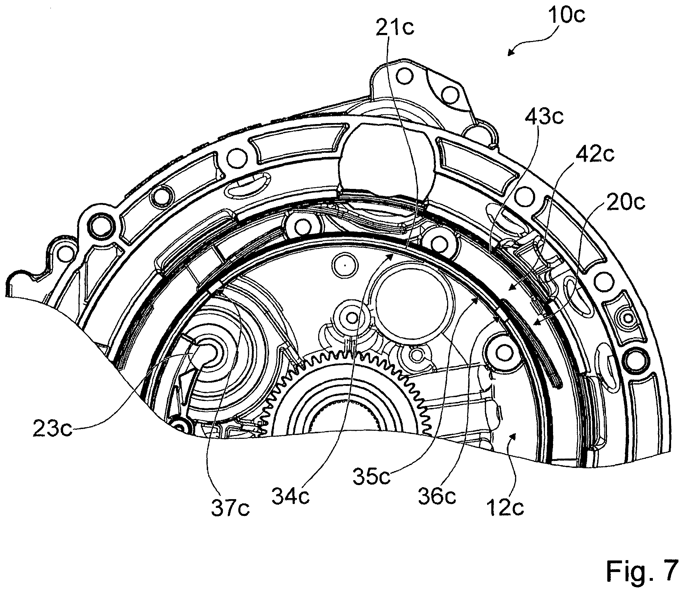

Die Figuren 7 bis 9 zeigen eine weitere alternative Ausführung einer als Doppelkupplungsgetriebevorrichtung ausgeführten Getriebevorrichtung 10c. Die Getriebevorrichtung 10c weist ein Getriebegehäuse 43c, ein innerhalb des Getriebegehäuses 43c angeordnetes Kupplungsgehäuse 11c und einen Schmiermittelspeicher 20c zur Aufnahme eines Schmiermittels für die Getriebevorrichtung 10c auf. Der Schmiermittelspeicher 20c umfasst einen mittelbar mit dem Getriebegehäuse 43c verbundenen Ölfangring 21c, der das Kupplungsgehäuse 11c zumindest teilweise umgibt. Der Ölfangring 21c ist als Blechring ausgeführt und weist einen Durchmesser von 237 mm und eine Breite von 50 mm auf.

Der Ölfangring 21c weist eine dem Kupplungsgehäuse 11c zugewandte Seite 34c auf, die im Wesentlichen als Ölführungsfläche 35c ausgebildet ist. Die dem Kupplungsgehäuse 11c zugewandte Seite 34c weist eine Aussparung 36c auf, die zur Führung von Schmiermittel in den Schmiermittelspeicher 20c hinein vorgesehen ist. Das im Betrieb von dem Kupplungsgehäuse 11c abgeschleuderte, auf die Ölführungsfläche 35c auftreffende Schmiermittel wird an der Ölführungsfläche 35c entlang auf die Aussparung 36c zugeleitet. Die Ölführungsfläche 35c ist im Wesentlichen glatt ausgeführt, sodass an der Ölführungsfläche 35c geführtes Schmiermittel in einer wenig turbulenten, ruhigen Strömung geführt wird. Aus dem an der Ölführungsfläche 35c ruhig geführten Schmiermittel können eingemischte Luftblasen austreten. Das Schmiermittel wird somit entschäumt. Äußere Abmessungen der Aussparung 36c betragen 16 mm und 32 mm. Die Aussparung 36c weist eine rechteckige Form auf. In alternativen Ausgestaltungen kann die Aussparung 36c unterschiedliche Formen aufweisen und unterschiedliche Abmessungen aufweisen. Eine Stirnseite der Aussparung 36a verläuft im Wesentlichen senkrecht zu einer Flächennormalen der Ölführungsfläche 35a, sodass das Schmiermittel an der Aussparung 36c annähernd tangential zur Ölführungsfläche 35c in den Schmiermittelspeicher 20c einfließt.

Die dem Kupplungsgehäuse 11c zugewandte Seite 34c weist einen geringen radialen Abstand 41c zu dem Kupplungsgehäuse 11c auf. Der Abstand 41c beträgt 5 mm. Das Kupplungsgehäuse 11c weist einen Durchmesser von 227 mm auf. Der Abstand 41c beträgt somit 2,2 Prozent des Durchmessers des Kupplungsgehäuses 11c.

Die dem Kupplungsgehäuse 11c zugewandte Seite 34c des Ölfangrings 21c bildet eine Rampe 38c zur Leitung des Schmiermittels aus. Die Rampe 38c ist als in Richtung von dem Kupplungsgehäuse 11c weggerichtet zurückgesetzter Bereich der dem Kupplungsgehäuse 11c zugewandte Seite 34c ausgeführt. Die Rampe 38c grenzt an die Aussparung 36c an. In Umfangsrichtung der dem Kupplungsgehäuse 11c zugewandten Seite 34c betrachtet ist die Rampe 38c als bezogen auf die Ölführungsfläche 35c abgesenkter Bereich ausgeführt. Die Rampe 38c erstreckt sich über einen Winkelbereich von 50 Grad in Umfangsrichtung der dem Kupplungsgehäuse 11c zugewandten Seite 34c des Ölfangrings 21c. Die Rampe 38c weist eine allmählich zunehmende Tiefe auf, die ihre größte Ausdehnung unmittelbar an der Aussparung 36c aufweist. Schmiermittel, das entlang der Ölführungsfläche 35c läuft, wird durch die Rampe 38c zu der Aussparung 36c geleitet.

Die dem Kupplungsgehäuse 11c zugewandte Seite 34c des Ölfangrings 21c weist eine weitere Aussparung 37c auf, die um einen Winkel von 90 Grad gegen die erste Aussparung 36c versetzt angeordnet ist. Der Winkel von 90 Grad wird in der Richtung entlang eines Umfangs des Ölfangrings 21c gemessen, entlang der die zwei Aussparungen 36c, 37c einen geringsten Abstand zueinander aufweisen. In alternativen Ausgestaltungen des Ölfangrings 21c können die weitere Aussparung 37c und die erste Aussparung 36c um einen anderen Winkel als 90 Grad gegeneinander versetzt angeordnet sein, beispielsweise in einem Winkel zwischen 90 Grad und 150 Grad oder einem geringeren Winkel als 90 Grad. Die weitere Aussparung 37c ist identisch zu der Aussparung 36c ausgeführt. Die dem Kupplungsgehäuse 11c zugewandte Seite 34c bildet eine weitere Rampe 39c aus, die identisch zu der Rampe 38c ausgeführt ist. Die weitere Rampe 39c leitet Schmiermittel zu der weiteren Aussparung 37c. Es ist vorstellbar, dass die dem Kupplungsgehäuse 11c zugewandte Seite 34c in alternativen Ausführungen eine dritte Aussparung oder zwei weitere Aussparungen aufweist, die zwischen der ersten Aussparung 36c und der weitere Aussparung 37c angeordnet sind.

Der Ölfangring 21c weist eine obere Hälfte 40c auf, in der die zwei Aussparungen 36c, 37c angeordnet sind. Die obere Hälfte 40c ist nach Montage in der Getriebevorrichtung 10c in Bezug auf eine Schwerkraftrichtung oben angeordnet. Bei einer Ausgestaltung des Ölfangrings 21c mit nur einer Aussparung 36c ist diese ebenfalls in der oberen Hälfte 40c angeordnet.

Das Getriebegehäuse 43c und der Ölfangring 21c begrenzen ein Teilvolumen 42c des Schmiermittelspeichers 20c teilweise. Das Schmiermittel läuft nach Eintritt durch die Aussparungen 36c, 37c an einer dem Kupplungsgehäuse 11c abgewandten Seite 34c des Ölfangrings 21c in Schwerkraftrichtung nach unten und wird in dem Teilvolumen 42c gespeichert. Ein größter Teil eines gespeicherten Volumens des Schmiermittels ist in einem Bereich einer unteren Hälfte des Ölfangrings 21c in dem Teilvolumen 42c gespeichert. Zwischen dem Ölfangring 21c und dem Getriebegehäuse 43c ist ein nicht näher dargestellter, aufvulkanisierter Dichtring zur Abdichtung des Teilvolumens 42c angeordnet. Das Getriebegehäuse 43c ist metallisch und leitet eine Wärme des Schmiermittels ab.

### Bezugszeichenliste

- 10: Getriebevorrichtung
- 11: Kupplungsgehäuse
- 12: Kupplungsraum
- 13: Lastschaltkupplung
- 14: Lastschaltkupplung
- 16: Innenwelle
- 17: Hohlwelle
- 18: Obere Abtriebswelle
- 19: Untere Abtriebswelle
- 20: Schmiermittelspeicher
- 21: Ölfangring
- 22: Ölhobel
- 23: Schmiermittelleitung
- 24: Schmiermittelleitung
- 25: Ringkanal
- 26: Schmiermittelkanal
- 27: Befüllungsöffnung
- 28: Rückführöffnung
- 29: Ausgangsöffnung
- 30: Teilgetriebe
- 31: Teilgetriebe
- 32: Getrieberaum
- 33: Haupteingangswelle
- 34: Seite
- 35: Ölführungsfläche
- 36: Aussparung
- 37: Aussparung
- 38: Rampe
- 39: Rampe
- 40: Hälfte
- 41: Abstand
- 42: Teilvolumen
- 43: Getriebegehäuse

## Patentansprüche

1. Doppelkupplungsgetriebe umfassend einen Zahnradsatz und eine Getriebevorrichtung (10a; 10b; 10c) mit einem Getriebegehäuse (43c), mit einem innerhalb des Getriebegehäuses (43c) angeordneten Kupplungsgehäuse (11a; 11c) und mit einem Schmiermittelspeicher (20a; 20b; 20c) zur Aufnahme eines Schmiermittels für die Getriebevorrichtung (10a; 10b; 10c), der einen zumindest mittelbar mit dem Getriebegehäuse (43c) verbundenen Ölfangring (21a; 21b; 21c) umfasst, der das Kupplungsgehäuse (11a; 11c) zumindest teilweise umgibt,
wobei der Ölfangring (21a; 21b; 21c) eine dem Kupplungsgehäuse (11a; 11c) zugewandte Seite (34a; 34b; 34c) aufweist, die im Wesentlichen als Ölführungsfläche (35a; 35b; 35c) ausgebildet ist, **dadurch gekennzeichnet, dass** die dem Kupplungsgehäuse (11a; 11c) zugewandte Seite (34a; 34b; 34c) des Ölfangrings (21a; 21b; 21c) zumindest eine Aussparung (36a; 36b; 36c) aufweist, die zur Führung von Schmiermittel in den Schmiermittelspeicher (20a; 20b; 20c) hinein vorgesehen ist, wobei das Doppelkupplungsgetriebe einen Trockensumpf zur Schmierung des Zahnradsatzes aufweist.

2. Doppelkupplungsgetriebe nach Anspruch 1,
**dadurch gekennzeichnet, dass**
die dem Kupplungsgehäuse (11c) zugewandte Seite (34c) des Ölfangrings einen geringen radialen Abstand (41c) zu dem Kupplungsgehäuse (11c) aufweist.

3. Doppelkupplungsgetriebe nach Anspruch 2,
**dadurch gekennzeichnet, dass**
der Abstand (41c) höchstens 10 mm beträgt.

4. Doppelkupplungsgetriebe nach einem der vorhergehenden Ansprüche,
**dadurch gekennzeichnet, dass**
die dem Kupplungsgehäuse (11c) zugewandte Seite (34c) des Ölfangrings (21c) zumindest eine Rampe (38c, 39c) zur Leitung des Schmiermittels ausbildet.

5. Doppelkupplungsgetriebe nach einem der vorhergehenden Ansprüche,
**dadurch gekennzeichnet, dass**
die dem Kupplungsgehäuse (11c) zugewandte Seite (34c) des Ölfangrings (21c) zumindest eine weitere Aussparung (37c) aufweist, die um einen Winkel von höchstens 150 Grad gegen die zumindest eine Aussparung (36c) versetzt angeordnet ist.

6. Doppelkupplungsgetriebe nach Anspruch 5,
**dadurch gekennzeichnet, dass**
der Ölfangring (21c) eine obere Hälfte (40c) aufweist, in der die zumindest zwei Aussparungen (36c, 37c) angeordnet sind.

7. Doppelkupplungsgetriebe nach einem der vorhergehenden Ansprüche,
**dadurch gekennzeichnet, dass**
das Getriebegehäuse (43c) und der Ölfangring (21c) ein Teilvolumen (42c) des Schmiermittelspeichers (20c) zumindest teilweise begrenzen.

8. Doppelkupplungsgetriebe nach einem der vorhergehenden Ansprüche,
**dadurch gekennzeichnet, dass**
der Ölfangring (21a; 21b) einen Ölhobel (22a; 22b) ausbildet.

9. Doppelkupplungsgetriebe nach einem der vorhergehenden Ansprüche,
**dadurch gekennzeichnet, dass**
der Schmiermittelspeicher (20a, 20b, 20c) einen Getrieberaum (32a) umfasst, in dem ein Teilvolumen des Schmiermittels speicherbar ist, wobei innerhalb des Getrieberaums (32a) eine elektrohydraulische Steuereinheit angeordnet ist.

10. Doppelkupplungsgetriebe nach einem der vorhergehenden Ansprüche,
**dadurch gekennzeichnet, dass**
das Teilvolumen des Schmiermittelspeichers (20a, 20b, 20c), welches mittels des Ölfangrings (21a; 21b; 21c) ausgebildet ist, ein Teilvolumen von zumindest 0,4 Litern aufweist.

## Claims

1. Twin-clutch gearbox, comprising a gear set and a gearbox device (10a; 10b; 10c) with a gear case (43c), a clutch housing (11a; 11c) located within the gear case (43c) and a lubricant reservoir (20a; 20b; 20c) for the accommodation of a lubricant for the gearbox device (10a; 10b; 10c), which lubricant reservoir (20a; 20b; 20c) comprises an oil catch ring (21a; 21b; 21c), which is at least indirectly connected to the gear case (43c) and at least partially surrounds the clutch housing (11a; 11c), wherein the oil catch ring (21a; 21b; 21c) has a side (34a; 34b; 34c) facing the clutch housing (11a; 11c) and substantially designed as an oil guide surface (35a; 35b; 35c),
**characterised in that**
the side (34a; 34b; 34c) of the oil catch ring (21a; 21b; 21c) which faces the clutch housing (11a; 11c) has at least one recess (36a; 36b; 36c) provided for guiding lubricant into the lubricant reservoir (20a; 20b; 20c), wherein the twin-clutch gearbox has a dry sump for lubricating the gear set.

2. Twin-clutch gearbox according to claim 1,
**characterised in that**
the side (34c) of the oil catch ring which faces the clutch housing (11c) has a small radial distance (41c) he clutch housing (11c).

3. Twin-clutch gearbox according to claim 2
**characterised in that**
the distance (41c) is no more than 10 mm.

4. Twin-clutch gearbox according to any of the preceding claims,
**characterised in that**
the side (34c) of the oil catch ring (21c) which faces the clutch housing (11c) forms at least one ramp (38c, 39c) for the guidance of the lubricant.

5. Twin-clutch gearbox according to any of the preceding claims,
**characterised in that**
the side (34c) of the oil catch ring (21c) which faces the clutch housing (11c) has at least one further recess (37c), which is offset against the at least one recess (36c) by an angle of no more than 150 degrees.

6. Twin-clutch gearbox according to claim 5,
**characterised in that**
the oil catch ring (21c) has an upper half (40c), in which the at least two recesses (36c, 37c) are located.

7. Twin-clutch gearbox according to any of the preceding claims,
**characterised in that**
the gear case (43c) and the oil catch ring (21c) at least partially bound a part-volume (42c) of the lubricant reservoir (20c).

8. Twin-clutch gearbox according to any of the preceding claims,
**characterised in that**
the oil catch ring (21a; 21b) forms an oil plane (22a; 22b).

9. Twin-clutch gearbox according to any of the preceding claims,
**characterised in that**
the lubricant reservoir (20a; 20b; 20c) comprises a gear chamber (32a), in which a part-volume of the lubricant can be stored, wherein an electro-hydraulic control unit is located within the gear chamber (32a).

10. Twin-clutch gearbox according to any of the preceding claims,
**characterised in that**
the part-volume of the lubricant reservoir (20a; 20b; 20c) which is formed by means of the oil catch ring (21a; 21b; 21c) is a part-volume of at least 0.4 litres.

## Revendications

1. Boîte de vitesses à double embrayage comprenant un ensemble d'engrenages et un dispositif de transmission (10a, 10b, 10c) avec un carter (43c) de boîte de vitesses, comprenant un carter d'embrayage (11a, 11c) disposé dans le carter de boîte de vitesses (43c) et un réservoir (20a, 20b, 20c) de lubrifiant destiné à accueillir le lubrifiant pour le dispositif de transmission (10a, 10b, 10c) qui comprend une bague d'arrêt d'huile (21a, 21b, 21c) reliée directement à l'au moins un carter de boite de vitesses (43c) qui entoure au moins en partie le carter d'embrayage (11a, 11c), la bague d'arrêt d'huile (21a, 21b, 21c) comprenant une face orientée (34a, 34b, 34c)vers le carter d'embrayage (11a, 11c) qui est conçue sous la forme essentiellement de surface de guidage d'huile (35a, 35b, 35c), **caractérisée en ce que** la face (34a, 34b, 34c) de la bague d'arrêt d'huile (21a, 21b, 21c) orientée vers le carter d'embrayage (11a, 11c) présente au moins un évidement (36a, 36b, 36c) qui sert à guider le lubrifiant dans le réservoir de lubrifiant (20a, 20b, 20c), le carter de vitesses à double embrayage présentant un carter sec destiné à lubrifier l'ensemble d'engrenages.

2. Boîte de vitesses à double embrayage selon la revendication 1, **caractérisée en ce que** la face (34c) de la bague d'arrêt d'huile orientée vers le boîtier d'embrayage (11c) présente un faible espace radial (41c) par rapport au carter d'embrayage (11c).

3. Boîte de vitesses à double embrayage selon la revendication 2, **caractérisée en ce que** l'espace (41c) s'élève au plus à 10 mm.

4. Boîte de vitesses à double embrayage selon l'une quelconque des revendications précédentes, **caractérisée en ce que** la face (34c) de la bague d'arrêt d'huile (21c) orientée vers le carter d'embrayage (11c) forme au moins une rampe (38c, 39c) destinée à guider le lubrifiant.

5. Boîte de vitesses à double embrayage selon l'une quelconque des revendications précédentes, **caractérisée en ce que** la face (34c) de la bague d'arrêt d'huile (21c) orientée vers le carter d'embrayage (11c) comprend au moins un autre évidement (37c) qui est décalé selon un angle de 150 degrés maximum par rapport à l'au moins un évidement (36c).

6. Boîte de vitesses à double embrayage selon la revendication 5, **caractérisé en ce que** la bague d'arrêt d'huile (21c) présente une moitié supérieure (40c) dans laquelle sont disposés au moins les deux évidements (36c, 37c).

7. Boîte de vitesses à double embrayage selon l'une quelconque des revendications précédentes, **caractérisée en ce que** le carter de boîte de vitesses (43c) et la bague d'arrêt d'huile (21c) délimitent au moins en partie un volume partiel (42c) du réservoir de lubrifiant (20c).

8. Boîte de vitesses à double embrayage selon l'une quelconque des revendications précédentes, **caractérisée en ce que** la bague d'arrêt d'huile (21a, 21b) est conçue sous la forme d'un plateau anti-barbotage.

9. Boîte de vitesses à double embrayage selon l'une quelconque des revendications précédentes, **caractérisée en ce que** le réservoir de lubrifiant (20a, 20b, 20c) comprend un espace de transmission (32a) dans lequel un volume partiel du lubrifiant est stocké, dans l'espace de transmission (32a) étant disposée une unité de commande électrohydraulique.

10. Boîte de vitesses à double embrayage selon l'une quelconque des revendications précédentes, **caractérisée en ce que** le volume partiel du réservoir de lubrifiant (20a, 20b, 20c) qui est conçue sous la forme de la bague d'arrêt d'huile (21a, 21b, 21c) présente un volume partiel d'au moins 0,4 litres.
